# EUROPÄISCHE PATENTANMELDUNG

(11) **EP 2 263 769 A1**
(43) Veröffentlichungstag der Anmeldung: **22.12.2010**
(21) Anmeldenummer: 10165520.7
(22) Anmeldetag: 10.06.2010
(51) Int. Cl.: B01D 29/21, B01D 35/153, B01D 36/00

(54) **3-stufiger Kraftstofffilter**

(30) Priorität: 16.06.2009 DE 102009025393
(71) Anmelder: MANN + HUMMEL GMBH, 71638 Ludwigsburg (DE)
(72) Erfinder: Reyinger, Jochen, 71336, Waiblingen (DE); Weindorf, Martin, 70806, Kornwestheim (DE); Brall, Sven, 66111, Saarbrücken (DE)

(57) **Zusammenfassung**

Die Erfindung betrifft einen Kraftstofffilter (1), umfassend: ein Coalescerelement (3) zum Abscheiden von Wasser aus dem Kraftstoff, sowie ein dem Coalescerelement (3) nachgeschaltetes Vorfilterelement (2). Das Coalescerelement (3), das Vorfilterelement (2) sowie ein dem Vorfilterelement (2) nachgeschaltetes Hauptfilterelement (4) sind entlang eines gemeinsamen Mittelrohrs (5) angeordnet. Die Erfindung betrifft auch eine Kraftstofffilteranordnung mit einem solchen Kraftstofffilter (1) sowie mit einem Gehäuse (12), an dem das Mittelrohr (5) des Kraftstofffilters (1) unter Ausbildung eines Ringraums (11) zwischen dem Kraftstofffilter (1) und dem Gehäuse (12) befestigt ist.

## Beschreibung

### Technisches Gebiet

Die Erfindung betrifft einen Kraftstofffilter, umfassend: ein Coalescerelement zur Abscheidung von Wasser aus dem Kraftstoff, sowie ein dem Coalescerelement nachgeschaltetes Vorfilterelement. Die Erfindung betrifft auch eine Kraftstofffilteranordnung mit einem solchen Kraftstofffilter.

### Stand der Technik

Aus der DE 10 2006 034 874 A1 ist ein Kraftstofffilter, insbesondere zur Diesel-Partikelfilterung bekannt geworden, bei dem ein Partikelfilter und ein diesem vorgeschaltetes Coalescerelement in einem gemeinsamen Gehäuse untergebracht sind. Das Coalescerelement dient zur verbesserten Abscheidung von Wassertröpfchen aus dem Kraftstoff. Zur Abdichtung zwischen dem einströmseitigen Kraftstoff und dem abströmseitigen Kraftstoff weist das Coalescerelement eine Dichtscheibe auf, die sich über das Coalescerelement in radialer Richtung bis zu einer Wandung des Gehäuses erstreckt. Zur Abdichtung an dem Gehäuse kann eine Elastomerlippe dienen, die an den äußeren Bereich der Endscheibe angespritzt ist und sich dichtend an dem Gehäuse anlegt.

Um den zunehmenden Anforderungen an die Wirksamkeit der Abscheidung bzw. der Reinigung des Kraftstoffs zu erfüllen, ist es bei vielen Anwendungen erforderlich, den Kraftstoff einem weiteren, so genannten Hauptfilterelement zuzuführen, welches eine zusätzliche Abscheidung feinster Partikel aus dem Kraftstoff ermöglicht. Ein solches Hauptfilterelement ist typischer Weise als separate Baugruppe in einem weiteren Gehäuse untergebracht, wodurch sich der Platz- und Kostenaufwand für die Filterung erhöht.

Der Erfindung liegt die Aufgabe zugrunde, die genannten Nachteile zu vermeiden und ein Filterelement bzw. eine Filteranordnung mit einem Kraftstofffilter bereitzustellen, bei denen über die gesamte Standzeit des Kraftstofffilters eine hochwirksame Abscheidung gewährleistet ist, wobei der Kraftstofffilter bzw. die Kraftstofffilteranordnung einfach herzustellen sind.

### Offenbarung der Erfindung

Diese Aufgabe wird gelöst durch einen Kraftstofffilter der eingangs genannten Art, bei der das Coalescerelement, das Vorfilterelement sowie ein dem Vorfilterelement nachgeschaltetes Hauptfilterelement entlang eines gemeinsamen Mittelrohrs angeordnet sind. Eine solche Anordnung der drei Elemente hintereinander ist insbesondere günstig, wenn wenig Bauraum zur Verfügung steht, so dass keine zwei separaten Baugruppen nebeneinander angeordnet werden können. Der 3-stufige Kraftstofffilter kann insbesondere in einem einzigen Gehäuse untergebracht sein, wobei das Mittelrohr, über das die Zufuhr bzw. Abfuhr von Kraftstoff erfolgen kann, an dem Gehäuse befestigt ist. Zusätzlich zum Mittelrohr kann der Transport des Kraftstoffs in diesem Fall auch in einem zwischen dem Kraftstofffilter und dem Gehäuse gebildeten Ringraum erfolgen.

In einer Ausführungsform kommt als Filtermedium für das Vorfilterelement zum Beispiel ein zweilagiges Medium mit einer groben Filtrationslage, z. B. aus Zellulose und einer hydrophoben Sperrschicht zum Einsatz. Für das Hauptfilterelement kann ein zweilagiges Filtermedium, beispielsweise mit einer Zelluloseschicht zur Feinfiltration und einer Schicht aus schmelzgeblasenen Fasern. Alternativ kann auch ein einlagiges Medium, insbesondere ein Medium mit sich entlang der Durchströmungsrichtung ändernder Struktur verwendet werden.

In einer Ausführungsform ist zwischen dem Coalescerelement und dem Hauptfilterelement oder zwischen dem Vorfilterelement und dem Hauptfilterelement eine sich vom Mittelrohr in radialer Richtung erstreckende Trenneinrichtung zur Abdichtung gegen ein Gehäuse bzw. eine Gehäusewandung vorgesehen. Mit Hilfe der Trenneinrichtung kann der Ringraum zwischen Gehäusewandung und Kraftstofffilter in zwei Ringraumabschnitte aufgeteilt werden, z.B. um die Reinseite des 3-stufigen Filterelements von der Rohseite bzw. vom stromabwärts auf den Coalescer folgenden Raum zu trennen, so dass ein Durchtritt von ungefiltertem Kraftstoff bzw. von abgeschiedenem Wasser zur Reinseite vermieden werden kann. Die Trenneinrichtung kann sich hierbei z.B. über eine Profildichtung an dem Mittelrohr abstützen. Insbesondere kann auch eine Endscheibe des Coalescers bzw. des Vorfilterelements oder des Hauptfilterelements als Teil der Trenneinrichtung dienen. Der zwischen der Endscheibe und dem Gehäuse verbleibende Spalt kann dann durch eine Dichtung, z.B. eine an die Endscheibe angespritzte Formdichtung, abgedichtet werden. Es versteht sich, dass ggf. auch eine sich von dem Mittelrohr in radialer Richtung erstreckende, separate Trennscheibe (ggf. mit Dichtelement zur Abdichtung des Spaltes) zwischen dem Coalescerelement bzw. dem Vorfilterelement und dem Hauptfilterelement angebracht werden kann.

In einer weiteren Ausführungsform weist die Trenneinrichtung ein Ventil zur Freigabe der Verbindung zum Hauptfilterelement bei Verstopfen des Vorfilterelements auf. Verstopft das Vorfilterelement, so steigt der Druck in dem (unteren) Ringraumabschnitt an, in dem das Vorfilterelement und das Coalescerelement angeordnet sind. Das Ventil öffnet, wenn die Druckdifferenz zwischen den beiden durch das Trennelement separierten Ringraumabschnitten einen bestimmten, vordefinierten Wert überschreitet. Das Ventil trennt entweder die Rohseite des Vorfilterelements von der Rohseite des Hauptfilterelements oder besonders vorteilhaft die Rohseite des Coalescers von der Rohseite des Hauptfilterelements. Auf diese Weise kann auch bei verstopftem Vorfilter weiterhin Kraftstoff zum Hauptfilter gelangen, so dass der Motor weiterhin mit Kraftstoff versorgt werden und so ein Liegenbleiben des Kraftfahrzeugs vermieden werden kann. Das Hauptfilterelement wird hierbei typischer Weise von Außen nach Innen durchströmt, so dass der durch das Ventil hindurch getretene Kraftstoff durch das Hauptfilterelement zur Reinseite geleitet wird.

Bei einer Weiterbildung ist das Ventil als elastische Dichtung, insbesondere als Dichtlippe zur Abdichtung des Kraftstofffilters gegen ein Gehäuse ausgebildet. Die Dichtlippe kann hierbei insbesondere aus einem Kunststoff, z.B. aus einem Elastomer hergestellt sein, wobei die Formgebung der Dichtlippe und die elastischen Eigenschaften des Materials so aufeinander abgestimmt sind, dass die Dichtlippe bei einem voreingestellten Druck von einer ersten Konfiguration, bei der die Dichtlippe den Kraftstofffilter gegen die Gehäusewand abdichtet, elastisch so weit deformiert wird, dass die Dichtlippe von der Gehäusewand abgehoben wird und der Kraftstoff vom unteren Ringraumabschnitt zum Hauptfilterelement im oberen Ringraumabschnitt transportiert werden kann.

In einer Ausführungsform ist das Coalescerelement zwischen dem Hauptfilterelement und dem Vorfilterelement angeordnet. Das Hauptfilterelement ist hierbei typischer Weise oberhalb, das Vorfilterelement unterhalb des Coalescerelements angeordnet und die Trenneinrichtung trennt den unteren Ringraumabschnitt mit dem Coalescerelement und dem Vorfilterelement vom oberen Ringraumabschnitt. Am unteren Ende des unteren Ringraumabschnitts ist typischer Weise ein Wassersammelraum vorgesehen, in dem das durch das Coalescerelement bzw. an dem Vorfilterelement abgeschiedene Wasser abgeführt werden kann. Das Vorfilterelement kann insbesondere eintrittsseitig eine wasserabweisende Imprägnierung aufweisen, so dass kein bzw. nur eine sehr geringe Menge Wasser in das Vorfilterelement eindringen kann. In beiden Fällen wird typischer Weise das Coalescerelement radial von Innen nach Außen und das Vorfilterelement von Außen nach Innen durchströmt. Alternativ können durch eine andere Ausgestaltung des Mittelrohrs auch umgekehrte Strömungsrichtungen erreicht werden.

In einer weiteren Ausführungsform weist das Mittelrohr mindestens drei sich in axialer Richtung erstreckende Kammern auf, die bevorzugt jeweils mindestens eine umfangsseitig am Mittelrohr vorgesehene Öffnung aufweisen. Die drei Kammern dienen hierbei der Zufuhr des ungereinigten Kraftstoffs, der Abfuhr des gereinigten Kraftstoffs, sowie dem Transport des durch das Vorfilterelement und das Coalescerelement gereinigten Kraftstoffs zum Hauptfilterelement. Die Kammern können parallel zueinander in unterschiedlichen Winkelsegmenten des Mittelrohrs verlaufen. Insbesondere kann das Mittelrohr in drei den Kammern entsprechende Winkelsegmente aufgeteilt sein, die sich z.B. jeweils über einen 120°-Winkel erstrecken, oder in vier Winkelsegmente, die sich jeweils über einen 90°-Winkel erstrecken. In jedem der Segmente ist hierbei jeweils eine Kammer untergebracht, wobei der Transport des Kraftstoffs zwischen den einzelnen Kammern über die umfangsseitig vorgesehenen Öffnungen erfolgen kann.

Bei einer Weiterbildung weist eine erste Kammer eine erste, umfangsseitig am Mittelrohr vorgesehene Öffnung zur Zuführung von ungefiltertem Kraftstoff zum Coalescerelement auf. Das Coalescerelement wird in diesem Fall von Innen nach Außen durchströmt; der Kraftstoff kann insbesondere von der Unterseite des Kraftstofffilters her zugeführt werden. Der nachfolgende Transport des Kraftstoffs vom Coalescerelement zum Vorfilterelement kann über den zwischen dem Kraftstofffilter und dem Gehäuse gebildeten Ringraum erfolgen.

In einer weiteren Weiterbildung ist in der ersten Kammer am oberen Ende des Coalescerelements eine Umlenkfläche zur Umlenkung des Kraftstoffs zu der ersten Öffnung vorgesehen. Die Umlenk- bzw. Begrenzungsfläche verschließt die erste Kammer am oberen Ende des Coalescerelements, so dass der ungefilterte Kraftstoff in der ersten Kammer nicht über das Coalescerelement hinaus, d.h. nicht weiter nach oben steigen kann als dies erforderlich ist. Zur Herstellung der Umlenkfläche kann das Mittelrohr insbesondere zweistückig ausgebildet sein (siehe unten).

Bei einer weiteren Weiterbildung weist eine zweite Kammer eine zweite, umfangsseitig am Mittelrohr vorgesehene Öffnung zur Abführung von gefiltertem Kraftstoff aus dem Vorfilterelement auf, wobei die zweite Öffnung bevorzugt unter einem Winkel zur ersten Öffnung angeordnet ist. Durch die zueinander versetzte Anordnung der Öffnungen wird ein Übergang des Kraftstoffs von der ersten Kammer in die zweite Kammer ermöglicht. In der zweiten Kammer kann der im Vorfilterelement gefilterte Kraftstoff dem Hauptfilterelement zugeführt werden, indem der Kraftstoff in der zweiten Kammer nach oben steigt, bis er am oberen Ende des Mittelrohrs in einen oberhalb des Kraftstofffilters gebildeten Raum eintritt, der an seinem radial außen liegenden Rand in den oberen Abschnitt des Ringraums übergeht. Dort kann der Kraftstoff in den Hauptfilter eintreten, der von Außen nach Innen durchströmt wird.

In einer Weiterbildung weist die dritte Kammer eine umfangsseitig am Mittelrohr vorgesehene dritte Öffnung zur Abführung von gefiltertem Kraftstoff aus dem Hauptfilterelement auf, wobei die dritte Öffnung bevorzugt unter einem Winkel zur ersten und zweiten Öffnung angeordnet ist. Über die dritte Öffnung kann der gereinigte Kraftstoff durch die dritte Kammer des Mittelrohrs zu einer an der Unterseite des Kraftstofffilters in dem Gehäuse vorgesehenen Austrittsöffnung verbracht werden. Es versteht sich, dass die dritte Kammer am oberen Ende des Mittelrohrs verschlossen ist, um einen Durchtritt des Kraftstoffs aus dem Raum oberhalb des Kraftstofffilters zu verhindern.

Bei einer weiteren Ausführungsform weist das Mittelrohr eine vierte sich in axialer Richtung erstreckende Kammer zur Entlüftung auf, die an der oberen Stirnseite des Mittelrohres eine Entlüftungsöffnung aufweist. Die sich in dem oberen Sammelraum ggf. ansammelnde Luft kann durch die vierte Kammer aus dem Kraftstofffilter abgeführt werden. Der Rücklauf erfolgt vorzugsweise zum Kraftstoffvorratsbehälter. Vorteilhafter Weise ist die Entlüftungsöffnung hierbei hinreichend klein, um die Menge des hindurchtretenden Kraftstoffs minimal zu halten.

In einer weiteren Ausführungsform ist das Mittelrohr zweistückig ausgebildet, wobei beide Teilstücke des Mittelrohrs bevorzugt im Bereich des oberen Endes des Coalescerelements miteinander verbindbar sind. Insbesondere kann das obere Teilstück des Mittelrohrs auf das untere Teilstück aufgesteckt werden, wobei beide Teilstücke dichtend miteinander verbunden werden. Das obere Teilstück des Mittelrohrs kann hierbei z.B. fest mit dem Hauptfilterelement verbunden sein, so dass dieser gemeinsam mit dem oberen Teilstück des Mittelrohrs auf das untere Teilstück des Mittelrohrs aufgesteckt werden kann. Dies ist insbesondere günstig, wenn das Hauptfilterelement als Wechselteil vorgesehen ist. Ferner kann durch die Zweiteilung des Mittelrohrs die oben beschriebene Umlenkfläche auf einfache Weise an der unteren Stirnseite des oberen Teilstücks des Mittelrohrs ausgebildet werden, was den Herstellungsaufwand reduziert.

Die Erfindung ist auch verwirklicht in einer Kraftstofffilteranordnung, umfassend: einen Kraftstofffilter wie oben beschrieben, sowie ein Gehäuse, an dem das Mittelrohr befestigt ist, wobei zwischen dem Kraftstofffilter und dem Gehäuse ein Ringraum gebildet ist. Der Kraftstofffilter wird hierbei typischer Weise am unteren Ende des Mittelrohrs z.B. durch Verschrauben an dem Gehäuse befestigt, wobei die erste bzw. die dritte Kammer des Mittelrohrs am unteren Ende mit einem in dem Gehäuse vorgesehenen Zulauf für ungereinigten Kraftstoff bzw. einem Ablauf für gereinigten Kraftstoff dichtend verbunden werden.

Bei einer Weiterbildung teilt die Trenneinrichtung den Ringraum im Bereich zwischen Coalescerelement und Hauptfilterelement oder zwischen Vorfilterelement und Hauptfilterelement in einen oberen Ringraumabschnitt und einen unteren Ringraumabschnitt auf. Wie oben dargestellt, kann die Trenneinrichtung eine Ventilfunktion erfüllen und den Durchtritt von Kraftstoff von dem unteren Ringraumabschnitt in den oberen Ringraumabschnitt ermöglichen, sofern das Vorfilterelement während der Standzeit des Kraftstofffilters verstopft.

Bei einer weiteren Ausführungsform ist an dem Gehäuse am unteren Ende des unteren Ringraumabschnitts ein Wassersammelraum gebildet. Der Wassersammelraum dient zum Sammeln des an dem Coalescerelement bzw. dem Vorfilterelement abgeschiedenen Wassers. Das in dem Wassersammelraum befindliche Wasser kann z.B. über ein Wasseraustragventil abgeführt werden, sobald die Wassermenge ein vorgegebenes Füllniveau überschreitet.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Kurze Beschreibung der Zeichnungen

Ausführungsbeispiele sind in der schematischen Zeichnung dargestellt und werden in der nachfolgenden Beschreibung erläutert. Es zeigen:

Fig. 1a eine Ansicht einer Ausführungsform eines erfindungsgemäßen Kraftstofffilters von oben,

Fig. 1b eine Fig. 1a entsprechende Ansicht von unten,

Fig. 2a eine Schnittdarstellung des Kraftstofffilters entlang der Schnittlinie A-A von Fig. 1a, sowie

Fig. 2b eine Schnittdarstellung des Kraftstofffilters entlang der Schnittlinie B-B von Fig. 1a.

### Ausführungsform(en) der Erfindung

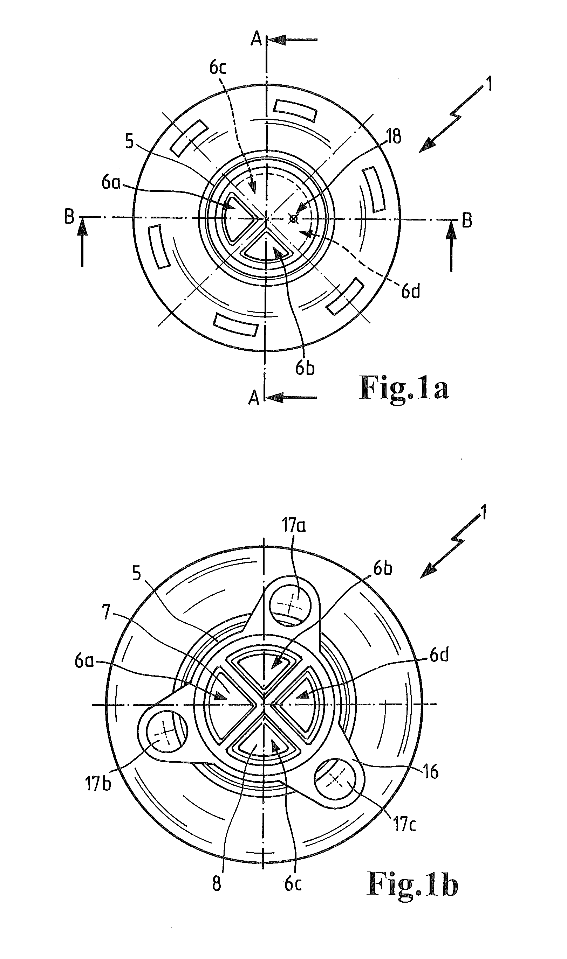

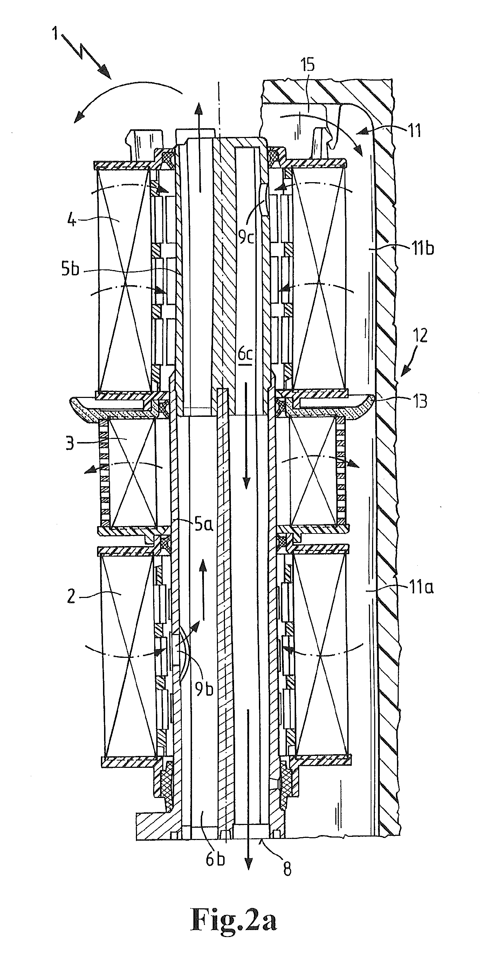

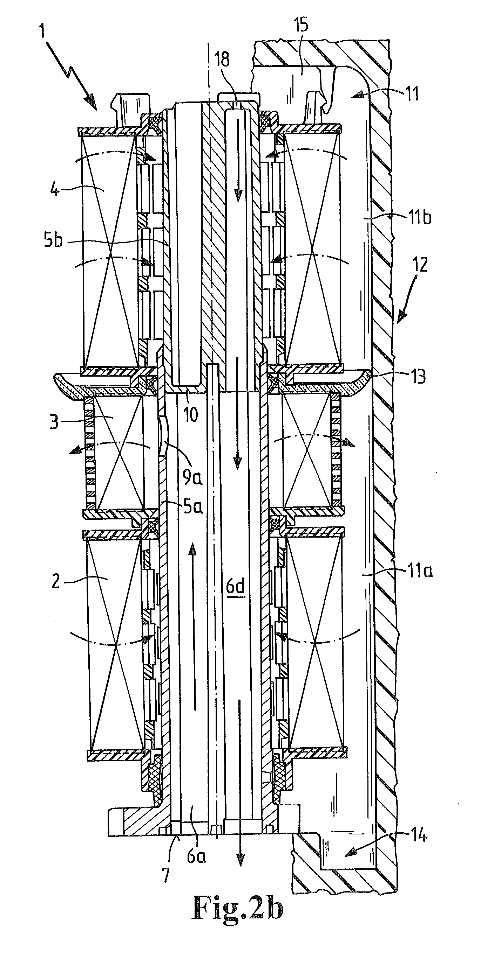

Fign. 1a,b zeigen einen 3-stufigen Kraftstofffilter 1 in einer Draufsicht und in einer Ansicht von unten. Der Kraftstofffilter 1 ist in Fign. 2a,b in einer Schnittdarstellung entlang der Schnittlinie A-A bzw. B-B von Fig. 1a dargestellt. Wie in Fign. 2a,b zu erkennen, weist der Kraftstoffilter 1 ein Vorfilterelement 2, ein Coalescerelement 3 sowie ein Hauptfilterelement 4 auf, die jeweils (kreis-)zylindrisch ausgebildet sind und der Reihe nach konzentrisch entlang eines gemeinsamen Mittelrohrs 5 angeordnet sind.

Das Mittelrohr 5 weist ein unteres Teilstück 5a und ein oberes Teilstück 5b auf, das am oberen Ende des Coalescerelements 3 auf das untere Teilstück 5a aufgesteckt ist, so dass die beiden Teilstücke 5a, 5b dichtend miteinander verbunden sind. Vier Kammern 6a-d erstrecken sich in axialer Richtung durch das Mittelrohr 5. Jede Kammer 6a-d erstreckt sich jeweils über einen Winkelbereich von ca. 90°, so dass das Innere des Mittelrohrs 5 in vier im Wesentlichen gleich große Sektoren aufgeteilt ist.

Im Folgenden wird der Fluss des Kraftstoffs durch den Kraftstofffilter 1 von einer in Fig. 1b gezeigten, rohseitigen Eintrittsöffnung 7 zu einer ebenfalls in Fig. 1b dargestellten, reinseitigen Austrittsöffnung 8 an der unteren Stirnseite des Mittelrohrs 5 anhand der Fign. 2a,b dargestellt, wobei die Pfeile die jeweilige Strömungsrichtung des Kraftstoffs andeuten.

Der an der Eintrittsöffnung 7 in den Kraftstofffilter 1 eintretende Kraftstoff steigt in der ersten Kammer 6a hoch und tritt über eine umfangsseitig an dem Mittelrohr 5 vorgesehene erste Öffnung 9a in das Coalescerelement 3 ein, das von Innen nach Außen durchströmt wird. Um das Hochsteigen des Kraftstoffs über den Bereich des Coalescerelements 3 hinaus zu verhindern, ist im Bereich des oberen Endes des Coalescerelements 3 eine Umlenkfläche 10 vorgesehen, welche die erste Kammer 6a nach oben begrenzt. Die Umlenkfläche 10 ist hierbei an der unteren Stirnseite des oberen Teilstücks 5b des Mittelrohrs 5 angebracht.

Der Kraftstoff durchströmt das Coalescerelement 3 in radialer Richtung von Innen nach Außen. Das Coalescerelement 3 kann z.B. aus einem hydrophilen Material bestehen und dient dem Coaleszieren, d.h. zum Verbinden von kleinen in dem Kraftstoff vorhandenen Wassertröpfchen zu größeren Wassertröpfchen. Der Kraftstoff tritt an der Außenseite des Coalescerelements 3 in einen Ringraum 11 ein, der zwischen dem Kraftstofffilter 1 und einem in Fign. 2a,b jeweils auf der rechten Seite angedeuteten Gehäuse 12 gebildet ist.

Der Ringraum 11 wird hierbei über eine Trenneinrichtung 13 in Form einer Dichtlippe in einen unteren Ringraumabschnitt 11a und einen oberen Ringraumabschnitt 11 b geteilt. Es versteht sich, dass auch die obere Endscheibe des Coalescerelements 3 dichtend ausgebildet ist und als Trennelement dient, so dass kein Kraftstoff über die Endscheibe bzw. die Dichtung 13 in den oberen Ringraumabschnitt 11 b gelangen kann. Die an der oberen Endscheibe des Coalescerelements 3 angespritzte Elastomer-Dichtlippe dient neben ihrer Funktion als Abdichtung auch als Ventil, wie weiter Unten im Einzelnen ausgeführt wird.

Der in den unteren Ringraumabschnitt 11a eingetretene Kraftstoff sinkt nach unten und tritt in das Vorfilterelement 2 ein, das von Außen nach Innen durchströmt wird. Die in dem Kraftstoff vorhandenen Wassertröpfchen sinken in dem Ringraumabschnitt 11a weiter nach unten in einen im Gehäuse 12 vorgesehenen Wassersammelraum 14. Das Vorfilterelement 2 ist an seiner Außenseite mit einer hydrophoben Beschichtung versehen, um einen Durchtritt der Wassertröpfchen zu vermeiden.

Der durch das Vorfilterelement 2 hindurch getretene Kraftstoff tritt durch eine zweite, zur ersten um 90° versetzte Öffnung 9b in eine zweite Kammer 6b des Kraftstofffilters 1 ein, in welcher der Kraftstoff bis zur oberen Stirnseite des Mittelrohrs 5 aufsteigt und dort in einen oberen Sammelraum 15 eintritt, der zwischen dem Gehäuse 12 und dem oberen Ende des Kraftstofffilters 1 gebildet ist. In dem Raum 15 bewegt sich der Kraftstoff in radialer Richtung nach außen und tritt in den oberen Ringraumabschnitt 11b ein. Der Kraftstoff in dem oberen Ringraumabschnitt 11b durchströmt dann das Hauptfilterelement 4 von Außen nach Innen und tritt über eine zur zweiten Öffnung 9b in einem Winkel von 180° angeordnete dritte Öffnung 9c in eine dritte Kammer 6c des Mittelrohrs 5 ein. In der dritten Kammer 6c strömt der gereinigte Kraftstoff nach unten und verlässt den Kraftstofffilter 1 an der Austrittsöffnung 8.

Der Kraftstofffilter 1 ist an dem Gehäuse 12 mit der unteren Stirnseite des Mittelrohrs 5 dichtend verbunden, wobei die Verbindung insbesondere durch Verschrauben hergestellt werden kann. Zu diesem Zweck ist am unteren Ende des Mittelrohrs 5 (vgl. Fig. 1b) ein Befestigungselement 16 angebracht, welches drei Löcher 17a-c zum Eingriff für Schrauben oder dergleichen aufweist. An die Eintrittsöffnung 7 sowie an die Austrittsöffnung 8 schließt sich in dem Boden des Gehäuses 12 eine Zu- bzw. Ableitung für den Kraftstoff an.

Im Boden des Gehäuses 12 ist eine weitere Ableitung vorgesehen, die sich an eine vierte, zur Entlüftung dienende Kammer 6d des Mittelrohres 5 anschließt, und die der Entleerung zum Tank dient. An der oberen Stirnseite der vierten Kammer 6d ist hierbei eine Entlüftungsöffnung 18 vorgesehen, durch die in dem Kraftstoff vorhandene Luft aus dem oberen Sammelraum 15 abgeführt werden kann.

Sowohl das Vorfilterelement 2 als auch das Hauptfilterelement 4 sind als Partikelfilter ausgeführt und können z.B. aus zickzackförmig geformten Filterbahnen bestehen. Es versteht sich, dass die Filterelemente 2, 4 auch auf andere Weise, z.B. als Blockfilter, ausgebildet sein können. Typischer Weise dient das Vorfilterelement 2 der Abscheidung gröberer Partikel, während das Hauptfilterelement 4 für die Abscheidung feinerer Partikel eingesetzt wird.

Verstopft das Vorfilterelement 2 während der Standzeit des Kraftstofffilters 1, steigt der Druck im unteren Ringraumabschnitt 11a an. Sobald der Druck einen kritischen Wert überschreitet, wird das äußere Ende der umlaufenden Elastomer-Dichtung 13 von der Wand des Gehäuses 12 abgehoben, so dass zwischen der Dichtung 13 und dem Gehäuse 12 ein Spalt gebildet wird, der einen Durchtritt des Kraftstoffs vom unteren Ringraumabschnitt 11a in den oberen Ringraumabschnitt 11b ermöglicht. Auf diese Weise kann sichergestellt werden, dass auch bei verstopftem Vorfilterelement 2 weiterhin Kraftstoff zum Hauptfilter 4 und von dort weiter zum Motor gelangt, so dass ein Liegenbleiben des Kraftfahrzeugs, in dem der Kraftstofffilter 1 typischer Weise angeordnet ist, vermieden werden kann. Es versteht sich, dass zumindest kurzzeitig ein Eindringen von an dem Coalescerelement 3 gebildeten Wassertröpfchen in das Hauptfilterelement 4 durch eine geeignete Imprägnierung vermieden werden kann, so dass auch bei verstopftem Vorfilterelement 2 das in dem Kraftstoff vorhandene Wasser nicht in das Hauptfilterelement 4 eindringen und zur Reinseite gelangen kann.

Wie weiter oben dargestellt, besteht das Mittelrohr 5 aus einem unteren und einem oberen Teilstück 5a, 5b, die im Bereich des oberen Endes des Coalescerelements 3 miteinander verbunden werden. Es versteht sich, dass zur Montage des Filterelements 1 in dem Gehäuse 12 das Hauptfilterelement 4 mit dem oberen Teilstück 5b des Mittelrohrs 5 fest verbunden sein kann, so dass das Hauptfilterelement 4 gemeinsam mit dem oberen Teilstück 5b des Mittelrohrs 5 auf das untere Teilstück 5b des Mittelrohrs 5 aufgesetzt werden kann. Weist die obere Endscheibe des Hauptfilterelements 4 wie in Fign. 2a,b gezeigt Rastelemente zur Verrastung an entsprechenden Rastelementen an dem Gehäuse 12 auf, so kann, insbesondere wenn das Gehäuse 12 in einen oberen und unteren Gehäuseteil aufweist, die z.B. durch Verschrauben miteinander verbunden sind, beim Abnehmen des oberen Gehäuseteils gleichzeitig das Hauptfilterelement 4 abgenommen werden.

Es versteht sich, dass das Vorfilterelement 2, das Hauptfilterelement 4 und das Coalescerelement 3 nicht zwingend in der in Fign. 2a,b gezeigten Reihenfolge entlang des Mittelrohrs 5 angeordnet sein müssen. Insbesondere kann die Reihenfolge des Vorfilterelements 2 und des Coalescerelements 3 vertauscht sein. In diesem Fall ist das Trennelement 13 im Bereich des oberen Endes des Vorfilterelements 2 angeordnet. Es versteht sich, dass das Trennelement 13 anders als in Fign. 2a,b gezeigt auch durch die untere Endscheibe des Hauptfilters 4 in Kombination mit einer sich von der Endscheibe in radialer Richtung bis zum Gehäuse 12 erstreckende Radialdichtung oder auf andere Weise ausgebildet werden kann. Auch in diesem Fall kann die Radialdichtung des Trennelements eine Ventilfunktion aufweisen, entweder indem die gesamte Radialdichtung im Bereich der Gehäusewand nach oben umklappt, oder indem ein Teilbereich der Radialdichtung oder ein geeignet ausgeformter Abschnitt an der Radialdichtung den Weg für den Kraftstoff freigibt.

## Patentansprüche

1. Kraftstofffilter (1), umfassend: ein Coalescerelement (3) zum Abscheiden von Wasser aus dem Kraftstoff, sowie ein dem Coalescerelement (3) nachgeschaltetes Vorfilterelement (2), **dadurch gekennzeichnet, dass** das Coalescerelement (3), das Vorfilterelement (2) sowie ein dem Vorfilterelement (2) nachgeschaltetes Hauptfilterelement (4) entlang eines gemeinsamen Mittelrohrs (5) angeordnet sind.

2. Kraftstofffilter nach Anspruch 1, bei dem zur Abdichtung gegen ein Gehäuse (12) zwischen dem Hauptfilterelement (4) und dem Coalescerelement (3) oder zwischen dem Hauptfilterelement (4) und dem Vorfilterelement (2) eine sich vom Mittelrohr (5) in radialer Richtung erstreckende Trenneinrichtung (13) vorgesehen ist.

3. Kraftstofffilter nach Anspruch 2, bei dem die Trenneinrichtung (13) ein Ventil zur Freigabe der Verbindung zum Hauptfilterelement (4) beim Verstopfen des Vorfilterelements (2) aufweist.

4. Kraftstofffilter nach Anspruch 3, bei dem das Ventil als elastische Dichtung, insbesondere als Dichtlippe (13) zur Abdichtung des Kraftstofffilters (1) gegen ein Gehäuse (12) ausgebildet ist.

5. Kraftstofffilter nach einem der vorhergehenden Ansprüche, bei dem das Coalescerelement (3) zwischen dem Hauptfilterelement (4) und dem Vorfilterelement (2) angeordnet ist.

6. Kraftstofffilter nach einem der vorhergehenden Ansprüche, bei dem das Mittelrohr (5) mindestens drei sich in axialer Richtung erstreckende Kammern (6a-c) aufweist, die bevorzugt jeweils mindestens eine umfangsseitig am Mittelrohr (5) angebrachte Öffnung (9a-c) aufweisen.

7. Kraftstofffilter nach Anspruch 6, bei dem eine erste Kammer (6a) eine erste, umfangsseitig am Mittelrohr (5) vorgesehene Öffnung (9a) zur Zuführung von ungefiltertem Kraftstoff zum Coalescerelement (3) aufweist.

8. Kraftstofffilter nach Anspruch 7, bei dem in der ersten Kammer (6a) am oberen Ende des Coalescerelements (3) eine Umlenkfläche (10) zur Umlenkung des Kraftstoffs zu der ersten Öffnung (9a) vorgesehen ist.

9. Kraftstofffilter nach einem der Ansprüche 6 bis 8, bei dem eine zweite Kammer (6b) eine zweite, umfangsseitig am Mittelrohr (5) vorgesehene Öffnung (9b) zur Abführung von gefiltertem Kraftstoff aus dem Vorfilterelement (2) aufweist, wobei die zweite Öffnung (9b) bevorzugt unter einem Winkel zur ersten Öffnung (9a) angeordnet ist.

10. Kraftstofffilter nach einem der Ansprüche 6 bis 9, bei dem die dritte Kammer (6c) eine umfangsseitig am Mittelrohr (5) vorgesehene dritte Öffnung (9c) zur Abführung von gefiltertem Kraftstoff aus dem Hauptfilterelement (4) aufweist, wobei die dritte Öffnung (9c) bevorzugt unter einem Winkel zur ersten und zweiten Öffnung (9a, 9b) angeordnet ist.

11. Kraftstofffilter nach einem der Ansprüche 6 bis 10, bei dem das Mittelrohr (5) eine vierte sich in axialer Richtung erstreckende Kammer (6d) zur Entlüftung aufweist, die an der oberen Stirnseite des Mittelrohres (5) eine Entlüftungsöffnung (18) aufweist.

12. Kraftstofffilter nach einem der vorhergehenden Ansprüche, bei dem das Mittelrohr (5) zweistückig ausgebildet ist, wobei beide Teilstücke (5a, 5b) des Mittelrohrs (5) bevorzugt im Bereich des oberen Endes des Coalescerelements (3) miteinander verbindbar sind.

13. Kraftstofffilteranordnung, umfassend:
einen Kraftstofffilter (1) nach einem der vorhergehenden Ansprüche, sowie ein Gehäuse (12), an dem das Mittelrohr (5) des Kraftstofffilters (1) befestigt ist,
wobei zwischen dem Kraftstofffilter (1) und dem Gehäuse (12) ein Ringraum (11) gebildet ist.

14. Kraftstofffilteranordnung nach Anspruch 13, bei dem eine Trenneinrichtung (13) den Ringraum (11) im Bereich zwischen Coalescerelement (3) und Hauptfilterelement (4) oder zwischen Vorfilterelement (2) und Coalescerelement (3) in einen oberen Ringraumabschnitt (11b) und einen unteren Ringraumabschnitt (11a) aufteilt.

15. Kraftstofffilteranordnung nach Anspruch 14, bei dem an dem Gehäuse (12) am unteren Ende des unteren Ringraumabschnitts (11a) einen Wassersammelraum (14) gebildet ist.
